# EUROPEAN PATENT SPECIFICATION

(11) **EP 4 395 272 B1**
(45) Date of publication and mention of the grant of the patent: **04.11.2026**
(21) Application number: 22216814.8
(22) Date of filing: 27.12.2022
(51) Int. Cl.: H04L 47/36, H04W 76/14, H04W 88/04

(54) **LOW-JITTER COMMUNICATION CONNECTION FOR A DISTRIBUTED REAL-TIME APPLICATION**
KOMMUNIKATIONSVERBINDUNG MIT GERINGEM FLIMMERN FÜR EINE VERTEILTE ECHTZEITANWENDUNG
CONNEXION DE COMMUNICATION À FAIBLE GIGUE POUR UNE APPLICATION EN TEMPS RÉEL DISTRIBUÉE

(43) Date of publication of application: 03.07.2024
(73) Proprietor: Deutsche Telekom AG, 53113 Bonn (DE)
(72) Inventor: SCHNIEDERS, Dominik, 52078 Aachen (DE)
(74) Representative: RDL Patentanwälte PartG mbB

(56) References cited:
- US-A1- 2012 092 991

## Description

The invention relates to a method for operating a communication network, wherein a communication network provides a sender of a distributed real-time application and a receiver of the distributed real-time application with a communication connection and the sender periodically transmits data packets to the receiver via the provided communication connection at a data rate exploiting a currently available bitrate of the communication connection. The invention further relates to computer program products.

The distributed real-time application may also be referred to as a near-real-time-application, a time-critical application or a latency-critical application. The distributed real-time application usually comprises an application frontend and an application backend. The application frontend and the application backend may be executed by a first computing device and a second computing device, respectively, the second computing device being different and separate from the first computing device.

The application frontend and the application backend are configured for transmitting application data via the communication network. The application data usually comprises a plurality of periodically transmitted data packets. The data packets may be transmitted by the application frontend (uplink) or by the application backend (downlink). Accordingly, each of the application frontend and the application backend may be either a sender of the distributed real-time application or a receiver of the distributed real-time application.

The first and second computing devices may be connected via the communication connection provided by the communication network. The communication network, i.e., a node of the communication network dynamically allocates network resources to the communication connection. The allocated network resources depend on a current load of the communication network and a current condition of the communication connection.

The distributed real-time application requires both a low latency and a low volatility of the latency, i.e. a low and constant latency, of the communication connection. The volatility of the latency is usually referred to as a jitter of the communication connection. The latency of the communication connection is essentially determined by a queue time of a data packet passing through a queue provided by the node of the communication network. The distributed real-time application may exploit, e.g., almost completely use a currently available bitrate of the communication connection, i.e. a link capacity, in order to prevent the queue and, as a consequence, the latency or the jitter of the communication connection from increasing.

However, the currently available bitrate may drop discontinuously. Due to inevitable round trip times, RTT, and reaction times, the sender of the distributed real-time application may be too late in adjusting the data rate to the dropped available bitrate resulting in temporarily longer passing-through times of some transmitted data packets. The temporarily longer passing-through times increase the jitter of the communication connection, the jitter impairing a proper operation of the distributed real-time application.

US 2012/0092991 A1 discloses a method for operating a mobile wireless communication device, wherein a transceiver of the mobile wireless communication device signals a changing currently available bitrate of a communication connection to an application processor of the mobile wireless communication device, the communication connection being provided by a communication network.

It is therefore an object of the invention to suggest a method for operating a communication network which reliably provides a distributed real-time application with a low-jitter communication connection. The invention is defined by the independent claims. Further embodiments of the invention are defined by the dependent claims.

One aspect of the invention is a method for operating a communication network, wherein a communication network provides a sender of a distributed real-time application and a receiver of the distributed real-time application with a communication connection and the sender periodically transmits data packets to the receiver via the provided communication connection at a data rate exploiting a currently available bitrate of the communication connection. The sender may transmit video frames as the data packets each video frame corresponding to a single image of the video. The video frames may comprise i-frames which comprise a complete single image of the video and p-frames which depend on a preceding i-frame or a preceding p-frame and define a single image of the video together with the preceding i-frame or the preceding p-frames.

According to the invention, a node of the communication network anticipates the currently available bitrate to discontinuously drop and signals a difference of the dropped bitrate from the currently available bitrate to the distributed real-time application and the distributed real-time application immediately reduces the data rate according to the signaled difference. Reducing the data rate may comprise reducing a frame rate and/or a resolution of video frames. The difference may be signaled to the distributed real-time application via an application programming interface, API, of the distributed real-time application.

The distributed real-time application adequately and in time reacts to the suddenly decreasing available bitrate, thus, avoiding an increasing queue time of the data packets. As a consequence, a jitter of the communication connection is reliably prevented.

Still according to the invention, the node signals the difference when the difference exceeds a determined threshold value. The threshold value precludes small droppings of the available bitrate from being signaled. The small droppings do not substantially affect the jitter of the communication connection.

According to the invention, the threshold value is dynamically determined depending on a type of the distributed real-time application and/or an ability of the distributed real-time application in exploiting the currently available bitrate. The threshold value is a runtime parameter of the communication network, particularly the node. Runtime parameters are adaptive.

The difference is advantageously signaled as an absolute value, as an index indicating a predetermined abolute value or as a percentage of the currently available bitrate. The absolute value may be given in MBit/s. There may be discrete, e.g., equally spaced absolute values predetermined by the communication network, particularly by the node. Each predetermined absolute value may be easily addressed by an integer index (enum).

In an embodiment, exploiting the currently available bitrate comprises determining a maximum data rate compatible with the currently available bitrate and adjusting the data rate to the determined maximum data rate. In other words, the sender dynamically follows the currently available bitrate and possibly uses the currently available bitrate without exceeding it.

Preferably, determining the maximum data rate comprises repeatedly, temporarily and gradually increasing the data rate on a trial basis and letting the determined maximum data rate be a data rate where a measured latency or a volatility of the measured latency of the communication connection increases. The sender may cause an operating system to affect a transmission of internet protocol, IP, packets created from the transmitted data packets by means of a mid-dleware in order to increase the data rate. Measuring the latency may be based on any feedback method applied by the node, e.g., low latency low loss scalable, L4S, throughput.

The node may provide a percentage of transmitted IP packets with a binary marker, the percentage indicating a queue time of the transmitted IP packets. The queue time is needed by the IP packets for passing through a queue provided by the node. The queue time corresponds to a length of the queue. The IP packets to be marked are selected statistically. An explicit congestion notification, ECN, bit of an IP header of an IP packet may be used as the binary marker.

In a favorable embodiment, the distributed real-time application, after having reduced the data rate, resumes exploiting the currently available bitrate of the communication connection. The distributed real-time application may increase the data rate when the currently available bitrate increases after having dropped discontinuously. Increasing the data rate may comprise increasing a frame rate and/or a resolution of video frames.

Still according to the invention, anticipating the currently available bitrate comprises calculating the dropped bitrate depending on a modulation scheme of the communication connection, a radio quality of the communication connection and/or spectral resources assigned to the communication connection. The listed items are not exhaustive. Any property or context of the communication connection indicating an imminent discontinuous drop of the bitrate may be used in calculating the dropped bitrate.

Preferably, a cellular network as the communication network provides the communication connection as a wireless connection, a mobile device as a terminal device executes an application frontend as one of the sender and the receiver and an edge cloud server as an application server executes an application backend as the other one of the sender and the receiver. A base transceiver station (BTS) of the cellular network provides the mobile device, e.g., a smartphone, a table, a notepad, a vehicle and the like, with a wireless radio connection.

An essential advantage of the inventive method is that the distributed real-time application is reliably provided with a low-jitter communication connection. Accordingly, a proper operation of the distributed real-time application exploiting a currently available bitrate of the communication connection is ensured even with a discontinuous drop of the available bitrate.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.
- Fig. 1: schematically shows an entity diagram of a communication network being operated in a method according to an embodiment of the invention;
- Fig. 2: schematically shows a graph of a currently available bitrate, a data rate of a distributed real-time application and a latency of a communication connection provided by the communication network shown in fig. 1.

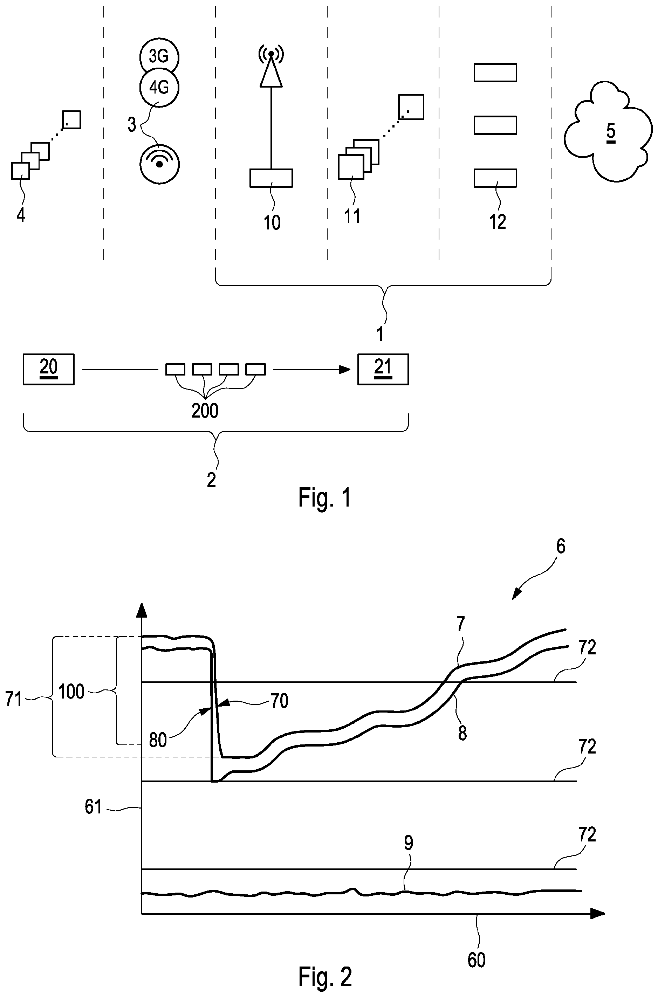

Fig. 1 schematically shows an entity diagram of a communication network 1. The communication network 1 comprises a node 10. The node 10 may be implemented by means of a computer program product. The computer program product comprises a storage medium with a program code. The program code causes a computing device to carry out a method according to the invention described below as the node 10 of the communication network 1 in cooperation with a distributed real-time application 2 (see below) when being executed by a processor of the computing device.

The communication network 1 may further comprise an application server 11 and a backbone 12. The communication network 1 may be connected to an internet 5. The communication network 1 is configured for providing a terminal device 4 with a communication connection 3. For instance, a cellular network as the communication network 1 provides the communication connection 3 as a wireless connection.

The terminal device 4 and the application server 11 may be configured for executing a distributed real-time application 2. For instance, a mobile device as the terminal device 4 executes an application frontend of the distributed real-time application 2 as one of a sender 20 of the distributed real-time application 2 and a receiver 21 of the distributed real-time application 2. The distributed real-time application 2 defines a minimum operable data rate.

The sender 20 or the receiver 21 of the distributed real-time application 2 may be implemented by means of a computer program product. The computer program product comprises a storage medium with a program code. The program code causes a computing device to carry out a method according to the invention described below as the sender 20 or the receiver 21 of the distributed real-time application 2 in cooperation with the node 10 of the communication network 1 when being executed by a processor of the computing device.

An edge cloud server as the application server 11 may execute an application backend of the distributed real-time application as the other one of the sender 20 and the receiver 21.

The communication network 1 is operated in a method according to an embodiment of the invention as follows.

The communication network 1 provides the sender 20 of the distributed real-time application 2 and the receiver 21 of the distributed real-time application 2 with the communication connection 3.

Fig. 2 schematically shows a graph 6 of a currently available bitrate 7, a data rate 8 of the distributed real-time application 20 and a latency 9 of the communication connection 3 provided by the communication network 1 shown in fig. 1. The graph 6 comprises an abscissa 60 indicating a time and an ordinate 61 indicating the currently available bitrate 7 in MBit/s, the data rate 8 in MBit/s and the latency 9 in ms. Furthermore, the graph 6 shows predetermined absolute values 72 of the currently available bitrate 7.

The sender 20 periodically transmits data packets 200 to the receiver 21 via the provided communication connection 3 at the data rate 8. The data rate 8 exploits the currently available bitrate 7 of the communication connection 3. Exploiting the currently available bitrate 7 may comprise determining a maximum data rate compatible with the currently available bitrate 7 and adjusting the data rate 8 to the determined maximum data rate. Determining the maximum data rate preferably comprises repeatedly, temporarily and gradually increasing the data rate 8 on a trial basis and letting the determined maximum data rate be a data rate 8 where the measured latency 9 or a volatility of the measured latency 9 of the communication connection 3 increases.

The node 10 of the communication network 1 anticipates the currently available bitrate 7 to discontinuously drop. Fig. 2 exemplarily shows an anticipted dropping 70 of the currently available bitrate 7. Anticipating the currently available bitrate 7 comprises calculating the dropped bitrate depending on a modulation scheme of the communication connection 3, a radio quality of the communication connection 3 and/or spectral resources assigned to the communication connection 3.

The node 10 signals a difference 71 of the dropped bitrate from the currently available bitrate 7 to the distributed real-time application 2. The difference 71 may be signaled as an absolute value, as an index indicating a predetermined absolute value 72 or as a percentage of the currently available bitrate 7.

The node 10 preferably signals the difference 71 when the difference exceeds a determined threshold value 100.

The threshold value 100 is dynamically determined depending on a type of the distributed real-time application 2 and/or an ability of the distributed real-time application 2 in exploiting the currently available bitrate 7.

The distributed real-time application 2 immediately reduces the data rate 8 according to the signaled difference 71. Fig. 2 shows an immediate reducing 80 of the data rate 8. The distributed real-time application 2, after having reduced the data rate 8, resumes exploiting the currently available bitrate 7 of the communication connection 3.

### Reference numerals

- 1: communication network
- 10: node
- 100: threshold value
- 11: application server
- 12: backbone
- 2: distributed real-time application
- 20: sender
- 200: data packet
- 21: receiver
- 3: communication connection
- 4: terminal device
- 5: internet
- 6: graph
- 60: ordinate
- 61: abscissa
- 7: currently available bitrate
- 70: anticipated dropping
- 71: difference
- 72: predetermined absolute value
- 8: data rate
- 80: immediate reducing
- 9: latency

## Claims

1. A method for operating a communication network (1), wherein
- a communication network (1) provides a sender (20) of a distributed real-time application (2) and a receiver (21) of the distributed real-time application (2) with a communication connection (3);
- the sender (20) periodically transmits data packets (200) to the receiver (21) via the provided communication connection (3) at a data rate (8) exploiting a currently available bitrate (7) of the communication connection (3);
- a node (10) of the communication network (1) anticipates the currently available bitrate (7) to discontinuously drop and signals a difference (71) of the dropped bitrate from the currently available bitrate (7) to the distributed real-time application (2), wherein anticipating the currently available bitrate (7) comprises calculating the dropped bitrate depending on a modulation scheme of the communication connection (3), a radio quality of the communication connection (3) and/or spectral resources assigned to the communication connection (3);
- the distributed real-time application (2) immediately reduces the data rate (8) according to the signaled difference (71),
the method being **characterized in that**
- the node (10) signals the difference (71) when the difference exceeds a determined threshold value (100), wherein the threshold value (100) is dynamically determined depending on a type of the distributed real-time application (2) and/or an ability of the distributed real-time application (2) in exploiting the currently available bitrate (7).

2. The method according to claim 1, wherein the difference (71) is signaled as an absolute value, as an index indicating a predetermined absolute value (72) or as a percentage of the currently available bitrate (7).

3. The method according to claim 1 or 2, wherein exploiting the currently available bitrate (7) comprises determining a maximum data rate compatible with the currently available bitrate (7) and adjusting the data rate (8) to the determined maximum data rate.

4. The method according to claim 3, wherein determining the maximum data rate comprises repeatedly, temporarily and gradually increasing the data rate (8) on a trial basis and letting the determined maximum data rate be a data rate (8) where a measured latency (9) or a volatility of the measured latency (9) of the communication connection (3) increases.

5. The method according to one of claims 1 to 4, wherein the distributed real-time application (2), after having reduced the data rate (8), resumes exploiting the currently available bitrate (7) of the communication connection (3).

6. The method according to one of claims 1 to 5, wherein a cellular network as the communication network (1) provides the communication connection (3) as a wireless connection, a mobile device as a terminal device (4) executes an application frontend as one of the sender (20) and the receiver (21) and an edge cloud server as an application server (11) executes an application backend as the other one of the sender (20) and the receiver (21).

7. A computer program product, comprising a storage medium with a program code, the program code causing a computing device to carry out a method according to one of claims 1 to 6 as a node (10) of a communication network (1) in cooperation with a distributed real-time application (2) when being executed by a processor of the computing device.

## Patentansprüche

1. Verfahren zum Betreiben eines Kommunikationsnetzwerks (1), wobei
- ein Kommunikationsnetzwerk (1) für einen Sender (20) einer verteilten Echtzeitanwendung (2) und einen Empfänger (21) der verteilten Echtzeitanwendung (2) eine Kommunikationsverbindung (3) bereitstellt;
- der Sender (20) periodisch Datenpakete (200) über die bereitgestellte Kommunikationsverbindung (3) mit einer Datenrate (8), die eine aktuell verfügbare Bitrate (7) der Kommunikationsverbindung (3) ausnutzt, an den Empfänger (21) überträgt;
- ein Knoten (10) des Kommunikationsnetzwerks (1) antizipiert, dass die aktuell verfügbare Bitrate (7) diskontinuierlich fällt, und eine Differenz (71) der gefallenen Bitrate von der aktuell verfügbaren Bitrate (7) an die verteilte Echtzeitanwendung (2) meldet, wobei das Antizipieren der aktuell verfügbaren Bitrate (7) das Berechnen der gefallenen Bitrate in Abhängigkeit eines Modulationsschemas der Kommunikationsverbindung (3), einer Funkqualität der Kommunikationsverbindung (3) und/oder von Spektralressourcen, die der Kommunikationsverbindung (3) zugeordnet sind, umfasst;
- die verteilte Echtzeitanwendung (2) die Datenrate (8) unmittelbar gemäß der gemeldeten Differenz (71) reduziert,
wobei das Verfahren **dadurch gekennzeichnet ist, dass**
- der Knoten (10) die Differenz (71) meldet, wenn die Differenz einen bestimmten Schwellenwert (100) übersteigt, wobei der Schwellenwert (100) abhängig von einem Typ der verteilten Echtzeitanwendung (2) und/oder einer Fähigkeit der verteilten Echtzeitanwendung (2), die aktuell verfügbare Bitrate (7) auszunutzen, dynamisch bestimmt wird.

2. Verfahren nach Anspruch 1, wobei die Differenz (71) als ein absoluter Wert, als ein Index, der einen vorbestimmten absoluten Wert (72) anzeigt, oder als ein Prozentsatz der aktuell verfügbaren Bitrate (7) gemeldet wird.

3. Verfahren nach Anspruch 1 oder 2, wobei das Ausnutzen der aktuell verfügbaren Bitrate (7) das Bestimmen einer maximalen Datenrate, die mit der aktuell verfügbaren Bitrate (7) kompatibel ist, und das Anpassen der Datenrate (8) an die bestimmte maximale Datenrate umfasst.

4. Verfahren nach Anspruch 3, wobei das Bestimmen der maximalen Datenrate das wiederholte, zeitweise und allmähliche versuchsweise Erhöhen der Datenrate (8) und das Zulassen umfasst, dass die bestimmte maximale Datenrate eine Datenrate (8) sein kann, bei der eine gemessene Latenz (9) oder eine Flüchtigkeit der gemessenen Latenz (9) der Kommunikationsverbindung (3) zunimmt.

5. Verfahren nach einem der Ansprüche 1 bis 4, wobei die verteilte Echtzeitanwendung (2) nach dem Reduzieren der Datenrate (8) wieder die aktuell verfügbare Bitrate (7) der Kommunikationsverbindung (3) ausnutzt.

6. Verfahren nach einem der Ansprüche 1 bis 5, wobei ein Mobilfunknetz als das Kommunikationsnetzwerk (1) die Kommunikationsverbindung (3) als eine drahtlose Verbindung bereitstellt, ein mobiles Gerät als ein Endgerät (4) ein Anwendungs-Frontend als einen aus dem Sender (20) und dem Empfänger (21) ausführt und ein Edge-Cloud-Server als ein Anwendungsserver (11) ein Anwendungs-Backend als den anderen aus dem Sender (20) und dem Empfänger (21) ausführt.

7. Computerprogrammprodukt, umfassend ein Speichermedium mit einem Programmcode, wobei der Programmcode eine Rechenvorrichtung veranlasst, ein Verfahren nach einem der Ansprüche 1 bis 6 als ein Knoten (10) eines Kommunikationsnetzwerks (1) im Zusammenwirken mit einer verteilten Echtzeitanwendung (2) auszuführen, wenn dieser durch einen Prozessor der Rechenvorrichtung ausgeführt wird.

## Revendications

1. Procédé d'exploitation d'un réseau de communication (1), dans lequel
- un réseau de communication (1) établit une connexion de communication (3) entre un émetteur (20) d'une application distribuée en temps réel (2) et un récepteur (21) de ladite application distribuée en temps réel (2);
- l'émetteur (20) transmet périodiquement des paquets de données (200) au récepteur (21), via la connexion de communication (3) mise à disposition, à un débit de données (8) exploitant un débit binaire actuellement disponible (7) de la connexion de communication (3);
- un nœud (10) du réseau de communication (1) anticipe une baisse discontinue du débit binaire actuellement disponible (7) et signale à l'application distribuée en temps réel (2) une différence (71) entre le débit binaire réduit et le débit binaire actuellement disponible (7), l'anticipation du débit binaire actuellement disponible (7) comprenant le calcul du débit binaire réduit en fonction d'un schéma de modulation de la connexion de communication (3), d'une qualité radio de la connexion de communication (3) et/ou des ressources spectrales attribuées à la connexion de communication (3);
- l'application distribuée en temps réel (2) réduit immédiatement le débit de données (8) en fonction de la différence (71) signalée,
le procédé étant **caractérisé en ce que**
- le nœud (10) signale la différence (71) lorsque celle-ci dépasse une valeur seuil (100) déterminée, la valeur seuil (100) étant déterminée de manière dynamique en fonction du type de l'application distribuée en temps réel (2) et/ou d'une capacité de l'application distribuée en temps réel (2) à exploiter le débit binaire actuellement disponible (7).

2. Procédé selon la revendication 1, dans lequel la différence (71) est signalée soit comme une valeur absolue, soit comme un indice indiquant une valeur absolue prédéterminée (72), soit comme un pourcentage du débit binaire actuellement disponible (7).

3. Procédé selon la revendication 1 ou 2, dans lequel l'exploitation du débit binaire actuellement disponible (7) comprend la détermination d'un débit de données maximal compatible avec le débit binaire actuellement disponible (7) et l'ajustement du débit de données (8) à ce débit maximal déterminé.

4. Procédé selon la revendication 3, dans lequel la détermination du débit maximal comprend l'augmentation répétée, temporaire et progressive du débit de données (8) à titre d'essai, le débit maximal déterminé pouvant être un débit de données (8) pour lequel une latence mesurée (9) ou une volatilité de cette latence mesurée (9) de la connexion de communication (3) augmente.

5. Procédé selon l'une des revendications 1 à 4, dans lequel l'application distribuée en temps réel (2) recommence à exploiter le débit binaire actuellement disponible (7) de la connexion de communication (3) après avoir réduit le débit de données (8).

6. Procédé selon l'une des revendications 1 à 5, dans lequel un réseau cellulaire servant de réseau de communication (1) fournit la connexion de communication (3) sous la forme de connexion sans fil, un appareil mobile servant de terminal (4) exécute un backend d'application sous la forme de l'un parmi l'émetteur (20) et le récepteur (21), et un serveur infonuagique en périphérie servant de serveur d'application (11) exécute un frontend d'application sous la forme de l'autre parmi l'émetteur (20) et le récepteur (21).

7. Produit logiciel, comprenant un support de stockage ayant un code de programme, ledit code de programme amenant un dispositif informatique à mettre en œuvre un procédé selon l'une des revendications 1 à 6 en tant que nœud (10) d'un réseau de communication (1), en coopération avec une application distribuée en temps réel (2), lorsqu'il est exécuté par un processeur du dispositif informatique.
